# EUROPÄISCHE PATENTSCHRIFT

(11) **EP 0 597 343 B1**
(45) Veröffentlichungstag und Bekanntmachung des Hinweises auf die Patenterteilung: **06.08.1997**
(21) Anmeldenummer: 93117640.8
(22) Anmeldetag: 30.10.1993
(51) Int. Cl.: B60Q 7/00

(54) **Warndreieck**
Warning triangle
Triangle de signalisation

(30) Priorität: 12.11.1992 DE 4238180
(43) Veröffentlichungstag der Anmeldung: 18.05.1994
(73) Patentinhaber: GEBRA GMBH & CO. GEBR. RADERSCHAD KG, 53773 Hennef (DE)
(72) Erfinder: Raderschad, Peter, D-53773 Hennef (DE)
(74) Vertreter: Fechner, Joachim, Dr.-Ing.

(56) Entgegenhaltungen:
- DE-A- 4 019 063
- DE-U- 9 214 680
- FR-A- 2 203 559
- US-A- 3 908 581

## Beschreibung

Die Erfindung betrifft ein Warndreieck zur Mitführung in Kraftfahrzeugen, bestehend aus einem Unterteil mit trapezförmigen Umriss, mit einer Basisplatte und ausschwenkbaren Standfüssen und zwei an dem Unterteil angelenkten, nach ihrer Aufrichtung zusammen das sich an das Unterteil anschließende Dreiecksoberteil bildenden Teilen mit Mitteln zurStabilisierung ihrer zur Bildung des Dreiecksoberteils aufgerichteten Lage, wobei die Basisplatte und die das Dreiecksoberteil bildenden Teile Reflexionsleisten und sich nach innen daran anschließende Leisten mit roten Fluoreszenzflächen oder weißen Flächen aufweisen.

Es ist bekannt, das in dem Personenkraftwagen mitzuführende Warndreieck auf der Innenseite des Kofferraumdeckels lösbar anzubringen, so daß es schon beim Öffnen des Kofferraumdeckels eine Warnfunktion für hinter dem Fahrzeug befindliche Verkehrsteilnehmer hat. Dieses einteilige Warndreieck kann gegebenenfalls aus seiner Halterung entnommen und nach dem Ausschwenken der Standfüsse aufgestellt werden. Die vorgeschriebene Größe des Warndreiecks setzt eine entsprechende Tiefe des Kofferraumdeckels voraus, die bei zahlreichen PKW-Modellen nicht gegeben ist.

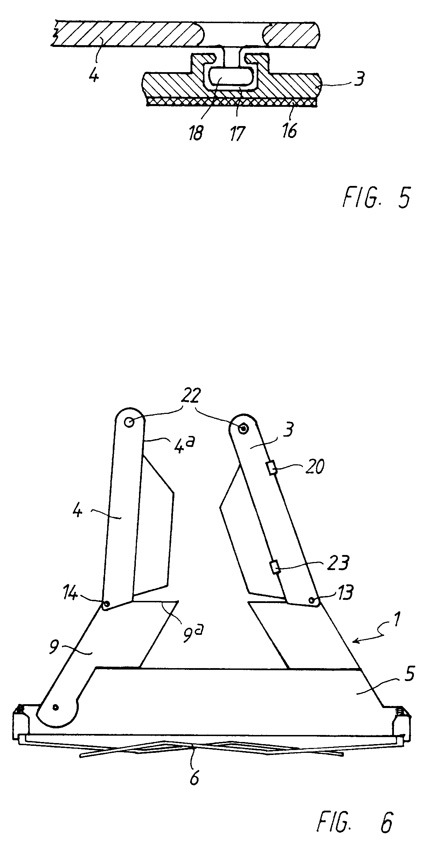

Aus der DE-OS 40 19 063 ist ein Warndreieck der eingangs genannten Art bekannt, dessen zweiteiliges Dreiecksoberteil zwecks Höhenreduzierung des Dreiecks zur Anbringung in einem Kofferraumdeckel herabgeschwenkt werden kann. Bei der in den Fig. 6 bis 9 gezeigten Ausführungsform sind die beiden schwenkbaren Leistenteile in den unteren Ecken der Basisleiste angelenkt. Im höhenreduzierten Zustand bilden die reflektierenden Leisten ein Kreuz. Dabei ist die Reflexionsfläche des Dreiecks sowie insbesondere die fluoreszierende Fläche gemäß ECE-Vorschrift des Dreiecks ganz erheblich verringert. Die Warnwirkung des so höhenreduzierten, im Kofferraumdeckel angebrachten Warndreiecks ist gering, zumal, wenn die Ebene des höhenreduzierten Dreiecks noch zur Fahrbahn geneigt ist. Bei der in den Fig. 10 bis 13 gezeigten Ausführungsform mit zwei schwenkbaren Leistenteilen liegen deren Anlenkpunkte auf dem Unterteil zwar höher. Beim Einschwenken dieser zweiarmig ausgebildeten Leisten zwecks Höhenreduzierung des Dreiecks kommen alle drei Reflexionsflächen gemäß Fig. 12 in eine Parallellage zueinander. Die Reflexionsfläche bleibt daher beim Zusammenlegen erhalten; die fluoreszierende Fläche gemäß ECE-Regelung verschwindet aber praktisch hinter den reflektierenden Leistenflächen. Das so zusammengelegte Warndreieck büßt daher an der Innenseite des Kofferraumdeckels bei Tage seine Warnwirkung weitgehend ein, zumal das Tageslicht durch den überstehenden Kofferraumdeckel teilweise abgeschirmt wird.

Aus US-A-3 908 581 ist ein Warndreieck bekannt, dessen Unterteil aus einer normalen Leiste besteht. An den beiden das Dreiecksoberteil bildenden Leisten sind keine Mittel zur Begrenzung der Schwenkbewegung in ihrer Aufeinanderlage parallel zur Basisleiste angebracht. Die an den Leisten ausgebildeten Kerben dienen der Stabilisierung der Leisten in ihrer aufgerichteten Lage.

Der Erfindung liegt die Aufgabe zugrunde, ein Warndreieck zur Mitführung in Fahrzeugen, insbesondere Personenkraftfahrzeugen zu schaffen, das in eine höhenreduzierte Form zusammengelegt werden kann, in der es auf der Innenseite des Fahrzeugkofferraumdeckels angebracht werden kann, wenn diese so bemessen ist, daß das Warndreieck in der normalen vorgeschriebenen Größe nicht genügend Platz findet, wobei die Warnwirkung des am Kofferraumdeckel angebrachten, höhenreduzierten Warndreiecks bei geöffnetem Deckel möglichst wenig verringert sein soll. Ferner soll das erfindungsgemäße Warndreieck in der höhenreduzierten Form eine nur unwesentlich verringerte Tageslicht-Fluoreszenzfläche gemäß ECE-Regelung aufweisen, so daß trotz der Lichtabschirmung durch den Kofferraumdeckel eine ausreichende Warnwirkung bei Tageslicht erreicht wird. Darüber hinaus soll in der höhenreduzierten Form des Warndreiecks auch die Reflexionsfläche möglichst wenig verringert werden. Schließlich soll ein Warndreieck geschaffen werden, das auch in der höhenreduzierten Form hinsichtlich der Anordnung von Reflexionsfläche und Fluoreszenzfläche gemäß ECE-Regelung einen gewisse Ähnlichkeit mit der Anordnung dieser Flächen in üblichen Warndreieck hat, d.h. dessen Fluoreszenzfläche von der Reflexionsfläche eingerahmt ist. Weitere Vorteile ergeben sich aus der nachfolgenden Beschreibung.

Diese Aufgabe wird bei dem eingangs genannten Warndreieck erfindungsgemäß dadurch gelöst, daß das Unterteil des Dreiecks einen trapezförmigen Umriss hat, die das Dreiecksoberteil bildenden Teile in den beiden oberen Trapezecken des Unterteils angelenkte Leisten sind und an den Leisten Mittel zur Begrenzung ihrer Schwenkbewegung in ihrer Aufeinanderlage parallel zur Basisleiste angebracht sind. Durch die Anbringung der das Dreiecksoberteil bildenden Leisten in den oberen Ecken eines trapezförmigen Dreiecksunterteils und durch die Begrenzung der Leistenschwenkbewegung in ihrer Aufeinanderlage parallel zur Basisleiste wird trotz beträchtlicher Höhenreduzierung nur eine geringe Verringerung der Reflexions- und Fluoreszenzflächen erreicht und so eine maximale Warnwirkung des höhenreduzierten Warndreiecks beibehalten. Außerdem wird die Warnwirkung auch noch dadurch verbessert, daß das zur Höhenreduzierung zusammengelegte Warndreieck die von diesem herrührende Anordnung von Reflexionsflächen und Fluoreszenzflächen zueinander beibehält, d.h. die Fluoreszenzflächen werden als eine ununterbrochene Fläche gesehen, die von der Reflexionsfläche eingerahmt ist. Während sich bei dem bekannten Dreieck, dessen Reflexionsleisten bei der Höhenreduzierung eine Kreuzform annehmen, gegenüber dem vollständig aufgerichteten Dreieck eine Verringerung der sichtbaren Reflexionsfläche auf etwa 60 bis 65% und eine Verringerung der sichtbaren Fluoreszenzfläche auf etwa 35% ergibt, liegen die entsprechenden Zahlenwerte bei dem erfindungsgemäßen Warndreieck bei etwa 75% (Reflexionsfläche) und 86% (Fluoreszenzfläche). Diese Zahlen gelten für eine Höhenreduzierung des Dreiecks auf 44%. Bei einer geringeren Höhenreduzierung, d.h. einer größeren Höhe des trapezförmigen Unterteils ist die Verringerung der reflektierenden und fluoreszierenden Flächen noch geringar. Im Vergleich zu der aus DE-OS 40 19 063 bekannten Ausführungsform, bei der in dem höhenreduzierten Zustand des Warndreiecks die drei Reflexionsleisten übereinander liegen, (Fig. 12), ergibt sich bei dem erfindungsgemäßen Warndreieck ebenfalls der Vorteil einer nur geringen Verringerung der fluoreszierenden Fläche im zusammengelegten Zustand. Das erfindungsgemäße Warndreieck kann auch nach der deutschen StVO ausgebildet sein, d.h. anstelle der rot fluoraszieranden Flächen tritt innerhalb des reflektierenden Leistandreiecks eine weiße Fläche mit schwarzem Balken. Diese weiße Fläche kann dann durch Plattenteile gebildet sein, die sich zu dem weißen Innendreieck ergänzen.

Nach der bevorzugten Ausführungsform des erfindungsgemäßen Warndreiecks ist an der vorderen der beiden das Oberteil bildenden Leisten rückseitig eine Längsnut und an dem freien Ende der hinteren Leiste vorderseitig ein in der Längsnut geführter Zapfen ausgebildet, wobei die Anordnung so getroffen ist, daß der Zapfen von der Anlenkachse der vorderen Leiste in deren Längsrichtung Abstand hat, wenn sich die beiden Leisten in der Aufeinanderlage befinden. Durch diese vorderseitig nicht sichtbare Nut/Zapfen-Verbindung zwischen den beiden Leisten ergibt sich ihre gegenseitige Kopplung bei der Schwenkbewegung, d.h. beim Verschwenken der einen Leiste wird die andere mitgenommen. Auf diese Weise wird das Aufrichten und Einschwenken dar Leisten und damit die Handhabung das Warndreiecks erleichtert. Die Längsnut kann in der aus Kunststoff bestehenden Leiste eingeformt sein, oder sie kann durch ein auf die Leiste rückseitig aufgesetztes, z.B. aufgeklebtes separates Teil gebildet werden. Der Abstand des Zapfens von dem Drehpunkt der vorderen Leiste gewährleistet, daß bei der Aufeinanderlage beider Leisten ein auf die hintere Leiste ausgeübtes Schwenkmoment zur Aufrichtung auch ein entsprechendes Moment an der vorderen Leiste zur Folge hat. Die Bewegungskopplung durch Nut und Zapfen vermeidet die Anbringung eines besonderen Gestänges. Die Stabilisierung der Leisten in ihrer das Dreiecksoberteil bildenden aufgerichteten Lage kann dadurch erreicht werden, daß die geradlinige Längsnut am freien Ende der Leiste abgeknickt verläuft. Der abgeknickte Teil der Längsnut kann kurz sein, z.B. eine Länge von größenordnungsmäßig 1 cm haben. Der abgeknickte Teil der Längsnut verläuft etwa quer, insbesondere unter einem Winkel von 60 bis 90° zur Schwenkrichtung des Zapfens. Ein selbsttätiges Zusammenfallen des Dreieckoberteils wird so vermieden.

Zweckmäßigerweise ist die hintere Leiste rückseitig mit einer Handhabe zum Aufrichten und Einschwenken der Leisten versehen. Die Handhabe ist nahe dem freien Ende der hinteren Leiste angebracht und kann beispielsweise aus einem an der Leiste angebrachten Ring oder dergl. bestehen.

Vorzugsweise ist als Mittel zur Schwenkbegrenzung die vordere Leiste mit einer in der Aufeinanderlage der Leisten auf der hinteren Leiste zum Anschlag kommenden Nase versehen. Die Nase verhindert, daß die beiden Leisten über die zur Basisleiste parallele Lage hinaus nach unten schwenken können. Das Dreieck nimmt beim Zusammenlegen zwecks Anbringung auf der Innenseite des Kofferraumdeckels immer eine definierte Trapezform an.

Bei einer anderen Ausgestaltung des erfindungsgemäßen Warndreiecks kann das Mittel zur Stabilisierung der Leisten in ihrer aufgerichteten Lage als Druckknopf ausgebildet sein. In diesem Falle besteht keine gekoppelte Bewegung der beiden Leisten. Jede Leiste wird separat aufgerichtet. Wenn die Leisten das Dreieckoberteil bilden, können die aufeinander liegenden Teile des Druckknopfes zusammengedrückt und so das aufgerichtete Dreieck stabilisiert werden. Bei dieser Ausführungsform kann das Mittel zur Begrenzung der Schwenkbewegung der Leisten zwei Nasen an der vorderen Leiste umfassen, wobei sich die vordere Leiste in der Aufeinanderlage mit der ersten Nase auf dem Unterteil abstützt und sich die hintere Leiste in dieser Lage auf der zweiten Nase abstützt. Auch so wird vermieden, daß die schwenkbaren Leistenteile über die Parallellage zur Basisleiste hinaus nach unten schwenken und eine unerwünschte Kreuzform bilden.

Die Höhenreduzierung des erfindungsgemäßen Warndreiecks kann in Anpassung an den am Kofferraumdeckel verfügbaren Platz unterschiedlich sein. Sie liegt im allgemeinen in dem Bereich von 40 bis 65 %, vorzugsweise in dem Bereich von 45 bis 55 %.

Die Erfindung wird nachfolgend an Hand der Zeichnung näher beschrieben. Es zeigen
Figur 1 die Vorderansicht einer ersten Ausführungsform des Warndreiecks in dem aufgerichteten Zustand;
Figur 2 die Rückansicht des in Figur 1 gezeigten Warndreiecks;
Figur 3 die Vorderansicht des in Figur 1 gezeigten Warndreiecks in dem höhenreduzierten Zustand zur Befestigung auf der Innenseite eines Kofferraumdeckels;
Figur 4 eine Rückansicht des Dreiecks nach Figur 2 nach dem Einschwenken der Standfüße und während des Einschwenkens der das Oberteil bildenden Leisten;
Figur 5 einen Schnitt nach der Linie V-V der Figur 2; und
Figur 6 die Rückansicht einer zweiten Ausführungsform des erfindungsgemäßen Warndreiecks mit eingeschwenkten Standfüssen beim Einschwenken der das Oberteil bildenden Leisten.

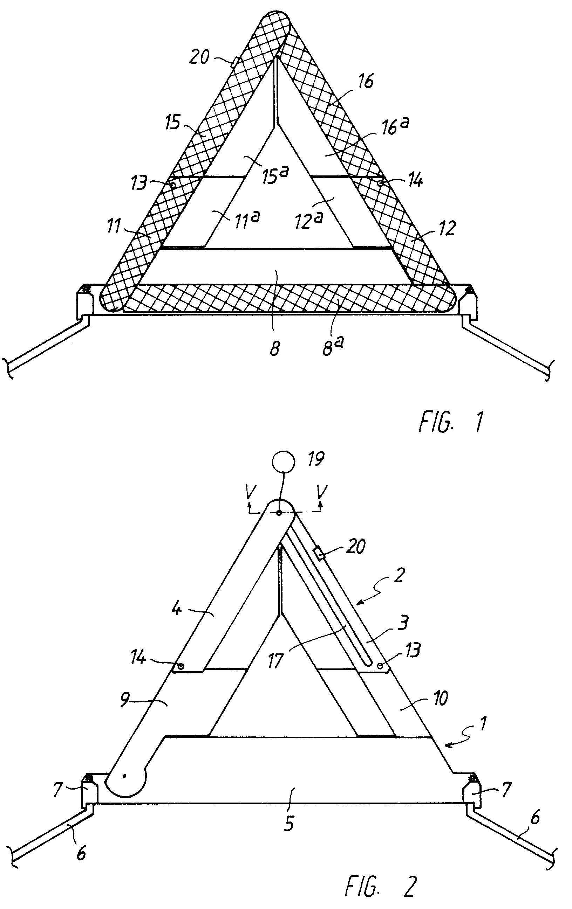

Die in den Figuren gezeigten Warndreiecke umfassen ein nicht zusammenlegbares Unterteil 1 von trapezförmigem Aufriss und ein zur Höhenreduzierung des Warndreiecks zusammenlegbares Dreiecksoberteil 2, das im wesentlichen aus zwei in den oberen Ecken des trapezförmigen Unterteils angelenkten Leisten 3 und 4 besteht. Das Unterteil 1 hat eine aus Metall bestehende Basisplatte 5, an deren beiden Enden - wie dargestellt - beidseitig selbsttätig ausschwenkbare Standfüße 6 angelenkt sind. Die Standfußgelenke 7 sind in EP-B-0342449 näher beschrieben, worauf hier bezug genommen wird. Die Basisplatte 5 trägt bei der Ausführungsform der Figuren 1 bis 5 entsprechend ECE-Regelung vorderseitig eine Licht reflektierende Leiste 8 und darüber eine fluoreszierende rote Beschichtung 8^{a}, z.B. aus einer roten Kunststoff-Folie. An der Basisplatte 5 ist ferner das aus Kunststoff bestehende Seitenteil 9 fest angebracht. Außerdem ist an der Leiste 8 bzw. der Basisplatte 5 das Seitenteil 10 fest angebracht. Die Seitenteile 9 und 10 tragen vorderseitig ebenfalls außen eine Licht reflektierende Leiste 11 bzw. 12 und eine sich nach innen daran anschließende fluoreszierende Leiste 11^{a} bzw. 12^{a}. Die Leistenteile 8-12^{a} bilden die Vorderseite des im wesentlichen trapezförmigen Unterteils 1.

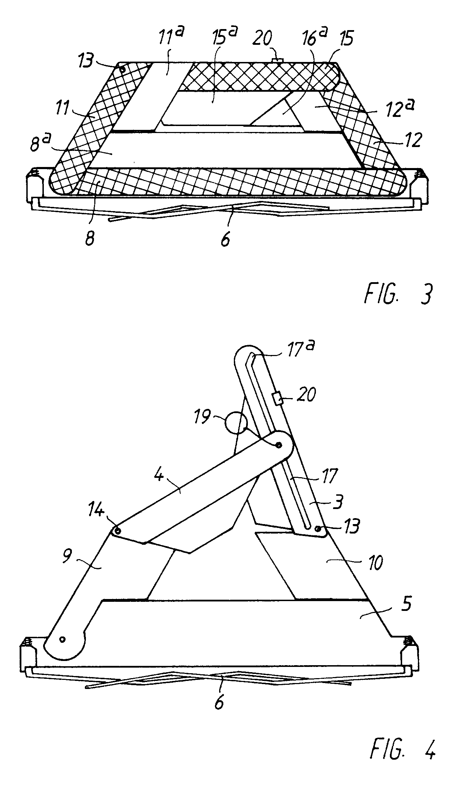

In den beiden oberen Ecken des trapezförmigen Unterteils 1 sind Schwenkgelenke 13 und 14 mit zu den Oberflächen der Leisten 11,12 senkrechten Achsen vorgesehen. In dem Gelenkpunkt 13 ist die Kunststoffleiste 3 angelenkt, die bei der in Figur 1 gezeigten ausgeschwenkten Position zusammen mit dem Leistenteil 10 eine Seite des Warndreiecks bildet. In analoger Weise ist durch das Gelenk 14 die Leiste 4 angelenkt. Die Leisten 3 und 4 tragen vorderseitig den Reflexionsteil 15 bzw. 16, an den sich nach innen die Fluoreszenzteile 15^{a} bzw. 16^{a} anschließen. Die Leiste 3 hat rückseitig eine Längsnut 17, die sich im wesentlichen geradlinig über die gesamte Länge dieser Leiste erstreckt. Die. Leiste 4 trägt vorderseitig, d.h. von dem reflektierenden Leistenteil 16 nach vorne abstehend (in den Figuren 1 bis 4 nicht sichtbar) einen Zapfen 18, der in die Nut 17 eingreift, wie in Figur 5 schematisch dargestellt ist. Durch den Eingriff des Zapfens 18 in die Nut 17 ergibt sich eine gekoppelte Schwenkbewegung der Leistenteile 3 und 4 in der in Figur 4 dargestellten Weise, wodurch das Einschwenken der Leisten 3,4 zwecks Höhenreduzierung des Warndreiecks vereinfacht wird. Figur 4 zeigt, daß die Längsnut 17 zum freien Ende der Leiste 3 hin eine Abknickung 17^{a} aufweist. Wenn sich der Zapfen 18 am Ende der Längsnut 17 in der Abknickung 17^{a} befindet, d.h. das Warndreieck vollständig aufgerichtet ist, sind die Leisten 3,4 in dieser Lage stabilisiert. Sie können nicht unter der Wirkung der Schwerkraft von selbst einschwenken. Die Leiste 3 muß vielmehr erste in kurzes Stück im Uhrzeigerdrehsinn ausgeschwenkt werden, bevor die Leiste 4 in der in Figur 4 dargestellten Weise einschwenken kann. Am freien Ende der Leiste 4 ist eine Handhabe 19 angebracht, die das Aufrichten und Einschwenken der Leisten 3,4 erleichtert.

Das aus Figur 4 ersichtliche Einschwenken der Leiste 4 ist beendet, wenn der Zapfen 18 am unteren rechten Ende der Längsnut 17 ankommt. Die Leiste 4 ist dann parallel zur Reflexionsleiste 8. Durch die Kopplung der Schwenkbewegungen der Leisten 3 und 4 ist dann auch die Leiste 3 in diese Lage parallel zur Leiste 8 eingeschwenkt. Die Leiste 3 trägt am Außenrand eine hakenförmige Nase 20, die in dieser Lage auf dem Aussenrand der Leiste 4 zur Anlage kommt, wie aus der Figur 3 ersichtlich ist. Die Nase 20 verhindert, daß die Leiste 3 über die Parallellage hinaus nach unten durchschwenken kann.

Figur 3 zeigt das zur Höhenreduzierung zwecks Anbringung am Kofferraumdeckel zusammengelegte Warndreieck. Es ist ersichtlich, daß dieses Dreieck einen kompakten Umriss hat und daher bei der Beladung des Kofferraumes nicht stören kann. Vorteilhaft ist an dem zusammengelegten Warndreieck, daß bezogen auf seine Höhenreduzierung die Verringerung der Reflexionsfläche (nur Pos. 16 und ein Teil von Pos. 15 verschwinden in der gezeigten Draufsicht) und insbesondere die Verringerung der Fluoreszenzfläche vergleichsweise gering ist. Außerdem bleibt der prinzipielle Aufbau des Warndreiecks mit der von der reflektierenden Fläche eingerahmten Fluoreszenzfläche im wesentlichen erhalten, was für der Erkennung des zusammengelegten Dreiecks als Warnhinweis von Vorteil ist.

Die in Figur 6 in der Rückansicht gezeigte Ausführungsform des erfindungsgemäßen Warndreiecks unterscheidet sich von der Ausführungsform nach den Figuren 1 bis 4 dadurch, daß die Längsnut 17,17^{a} entfallen ist. Die Leisten 3 und 4 sind unabhängig voneinander schwenkbar. Die Stabilisierung des aufgerichteten Oberteils erfolgt in an sich bekannter Weise durch einen Druckknopf 22. Am Außenrand der vorderen Leiste 3 ist eine nach hinten überstehende erste Nase 20 angebracht. An der Grenzlinie zwischen dem Reflexionsteil und dem Fluoreszenzteil der Leiste 3 ist rückseitig ferner eine zweite Nase 23 angeformt, die ebenfalls nach hinten vorsteht. Beim Herabschwenken der Leiste 3 in die Parallellage zur Basisplatte 5 kommt die Nase 20 am oberen Rand 9^{a} des Seitenteils 9 zur Auflage. Bei dem anschließenden Einschwenken der Leiste 4 in die Parallellage kommt der Innenrand 4^{a} auf der Nase 23 zur Auflage. Das so zusammengelegte Warndreieck hat daher in der Ansicht ebenfalls das in Figur 3 gezeigte Aussehen.

## Patentansprüche

1. Warndreieck zur Mitführung in Kraftfahrzeugen, bestehend aus einem Unterteil (1,9,10) mit trapezförmigen Umriss, mit einer Basisleiste (5) und ausschwenkbaren Standfüssen (6) und zwei an dem Unterteil angelenkten, nach ihrer Aufrichtung zusammen das sich an das Unterteil anschließende Dreiecksoberteil (2) bildenden Teilen mit Mitteln zur Stabilisierung ihrer zur Bildung des Dreiecksoberteils aufgerichteten Lage, wobei die Basisleiste (5) und die das Dreiecksoberteil (2) bildenden Teile Reflexionsleisten (8,11,12 bzw. 15,16) und sich nach innen daran anschließende Leisten (8^{a},11^{a},12^{a} bzw. 15^{a},16^{a}) mit roten Fluoreszenzflächen oder weißen Flächen aufweisen, dadurch gekennzeichnet, daß die das Dreiecksoberteil (2) bildenden Teile in den beiden oberen Trapezecken (13,14) des Unterteils (1,9,10) angelenkte Leisten (3,4) sind und an den Leisten (3,4) Mittel (20,23) zur Begrenzung ihrer Schwenkbewegung in ihrer Aufeinanderlage parallel zur Basisleiste angebracht sind.

2. Warndreieck nach Anspruch 1, dadurch gekennzeichnet, daß an der vorderen (3) der beiden Leisten rückseitig eine Längsnut (17) und an dem freien Ende der hinteren Leiste (4) vorderseitig ein in der Längsnut (17) geführter Zapfen (18) ausgebildet sind, wobei die Anordnung so getroffen ist, daß der Zapfen (18) von der Anlenkachse (13) der vorderen Leiste (3) in deren Längsrichtung Abstand hat, wenn sich beide Leisten (3,4) in der Aufeinanderlage befinden.

3. Warndreieck nach Anspruch 2, dadurch gekennzeichnet, daß das Mittel zur Stabilisierung der aufgerichteten Leistenlage dadurch gebildet ist, daß die geradlinige Längsnut (17) am freien Ende der Leiste (3) abgeknickt verläuft.

4. Warndreieck nach einem der Ansprüche 1 bis 3, dadurch gekennzeichnet, daß die hintere Leiste (4) rückseitig mit einer Handhabe (19) zum Aufrichten und Einschwenken der Leisten (3,4) versehen ist.

5. Warndreieck nach einem der Ansprüche 1 bis 4, dadurch gekennzeichnet, daß als Mittel zur Schwenkbegrenzung die vordere Leiste (3) mit einer in der Aufeinanderlage auf der hinteren Leiste (4) zum Anschlag kommenden Nase (20) versehen ist.

6. Warndreieck nach Anspruch 1, dadurch gekennzeichnet, daß das Mittel zur Stabilisierung der Leisten in ihrer aufgerichteten Lage als Druckknopf (22) ausgebildet ist.

7. Warndreieck nach Anspruch 1, dadurch gekennzeichnet, daß das Mittel zur Begrenzung der Schwenkbewegung der Leisten (3,4) zwei Nasen (20,23) an der vorderen Leiste (3) umfaßt, wobei sich die vordere Leiste in der Aufeinanderlage mit der ersten Nase (20) auf dem Unterteil (1) abstützt und sich die hintere Leiste (4) in dieser Lage auf der zweiten Nase (23) abstützt.

## Claims

1. Warning triangle destined to be taken along in motor vehicles consisting of a base portion (1,9,10) of trapezoidal outline with a basis web (5) and legs (6) adapted to be swung out and two portions hinged at the base portion which after setting them up form together the top portion (2) of the triangle adjacent to the base portion, said portions having means for stabilizing their set up position when forming the top portion of the triangle, said basis web (5) and the portions forming the triangle top portion (2) comprising reflecting webs (8,11,12 and 15,16, respectively) and webs (8^{a},11^{a}12^{a} and 15^{a},16^{a}, respectively) inwardly adjacent to said reflecting webs and having red fluorescing or white surfaces, characterized in that the portions forming the top portion (2) of the triangle are webs (3,4) hinged in the two upper trapezoidal corners (13,14) of the base portion (1,9,10), and means (20,23) for limiting their swing in a position one on top of the other and parallel to the basis web are mounted at the webs (3,4).

2. Warning triangle according to claim 1, characterized in that a longitudinal groove (17) is formed on the back of the front web (3), and a plug (18) guided in the longitudinal groove (17) is formed on the front of the back web (4) at the free end thereof, the arrangement being construed so that the plug (18) is spaced from the hinge axis (13) of the front web (3) in the longitudinal direction thereof when both webs (3,4) are in a position one on top of the other.

3. Warning triangle according to claim 2, characterized in that the means for stabilizing the set up web position is formed in that the straight-lined longitudinal groove (17) is bent at the free end of the web (3).

4. Warning triangle according to any of the claims 1 to 3, characterized in that the back of the back web (4) is provided with a handle (19) for setting up and swinging the webs (3,4).

5. Warning triangle according to any of the claims 1 to 4, characterized in that the front web (3) is provided with a lug (20) as a means for limiting the swing motion, said lug coming to a stop on the back web (4) when the webs are one on top of the other.

6. Warning triangle according to claim 1, characterized in that the means for stabilizing the webs in their set up position is formed as a press button (22).

7. Warning triangle according to claim 1, characterized in that the means for limiting the swing motion of the webs (3,4) comprises two lugs (20,23) at the front web (3), the front web being supported by the first lug (20) on the base portion (1) and the back web (4) being supported on the second lug (23) when the webs are positioned one on top of the other.

## Revendications

1. Triangle de signalisation à emporter dans des véhicules automobiles, constitué par une partie inférieure (1, 9, 10) à profil trapézoïdal, comprenant une latte de base (5) et des pieds (6) aptes à pivoter vers l'extérieur, et par deux éléments articulés à la partie inférieure et formant ensemble, après avoir été relevés, la partie supérieure (2) du triangle qui se raccorde à la partie inférieure, comprenant des moyens pour la stabilisation de leur position relevée pour la formation de la partie supérieure du triangle, dans lequel la latte de base (5) et les éléments formant la partie supérieure (2) du triangle présentent des lattes réfléchissantes (8, 11, 12, respectivement 15, 16), ainsi que des lattes qui s'y raccordent vers l'intérieur (8^{a}, 11^{a}, 12^{a}, respectivement 15^{a}, 16^{a}) possédant des surfaces fluorescentes rouges ou des surfaces blanches, caractérisé en ce que les éléments formant la partie supérieure (2) du triangle sont des lattes (3, 4) articulées aux deux coins supérieurs du trapèze (13, 14) de la partie inférieure (1, 9, 10) et, contre les lattes (3, 4), sont appliqués des moyens (20, 23) pour limiter leur mouvement de pivotement dans leur position superposée parallèlement à la latte de base.

2. Triangle de signalisation selon la revendication 1, caractérisé en ce que, sur la latte (3) antérieure par rapport aux deux lattes, est pratiquée, côté dorsal, une rainure longitudinale (17) et, à l'extrémité libre de la latte arrière (4), est réalisé, côté frontal, un tourillon (18) guidé dans la rainure longitudinale (17), l'agencement étant tel que le tourillon (18) se trouve à l'écart de l'axe d'articulation (13) de la latte antérieure (3) dans sa direction longitudinale lorsque les deux lattes (3, 4) sont superposées.

3. Triangle de signalisation selon la revendication 2, caractérisé en ce que le moyen pour stabiliser la position relevée des lattes est réalisé de telle sorte que la rainure longitudinale rectiligne (17) s'étend en présentant une déviation à l'extrémité libre de la latte (3).

4. Triangle de signalisation selon une des revendications 1 à 3, caractérisé en ce que la latte arrière (4) est munie, côté dorsal, d'une poignée (19) pour relever et faire pivoter les lattes (3, 4) vers l'intérieur.

5. Triangle de signalisation selon une des revendications 1 à 4, caractérisé en ce que, à titre de moyen pour limiter le pivotement, la latte antérieure (3) est munie d'un nez (20) venant buter, dans la position superposée, contre la latte arrière (4).

6. Triangle de signalisation selon la revendication 1, caractérisé en ce que le moyen pour stabiliser les lattes dans leur position relevée est réalisé sous forme de bouton-poussoir (22).

7. Triangle de signalisation selon la revendication 1, caractérisé en ce que le moyen pour limiter le mouvement de pivotement des lattes (3, 4) comprend deux nez (20, 23) sur la latte antérieure (3), dans lequel la latte antérieure vient s'appuyer, dans la position superposée, avec le premier nez (20) sur la partie inférieure (1) et la latte arrière (4) vient s'appuyer dans cette position sur le deuxième nez (23).
